# EUROPÄISCHE PATENTSCHRIFT

(11) **EP 2 943 356 B1**
(45) Veröffentlichungstag und Bekanntmachung des Hinweises auf die Patenterteilung: **31.01.2018**
(21) Anmeldenummer: 14706525.4
(22) Anmeldetag: 20.02.2014
(51) Int. Cl.: B60B 35/00, B60B 35/12, B60B 35/16, B60K 17/04, F16D 65/12

(54) **LENKBARE RADSEITE EINER ANTRIEBSACHSE**
STEERABLE WHEEL SIDE OF A DRIVE AXLE
CÔTÉ ROUE DIRIGEABLE D'UN ESSIEU MOTEUR

(30) Priorität: 12.04.2013 DE 102013206545
(43) Veröffentlichungstag der Anmeldung: 18.11.2015
(73) Patentinhaber: Kessler & Co. GmbH & Co. KG, 73453 Abtsgmünd (DE)
(72) Erfinder: BITTLINGMAIER, Günter, 73432 Ebnat (DE)
(74) Vertreter: Manitz Finsterwald Patentanwälte PartmbB
(86) Internationale Anmeldenummer: PCT/EP2014/053277
(87) Internationale Veröffentlichungsnummer: WO 2014/166662

(56) Entgegenhaltungen:
- EP-A1- 0 562 122
- DE-A1- 3 935 114
- DE-A1-102004 043 287

## Beschreibung

Die Erfindung bezieht sich auf lenkbare Radseiten einer Antriebsache für schwere Kranfahrzeuge oder dergleichen, mit einer an einer Achsgabel eines mittleren Achsenabschnittes lenkbeweglich angeordneten Achsschenkellagerung mit von einem Antriebswellenteil axial durchsetztem Achsschenkel, auf dem eine Radnabe bzw. ein Radträger mit einem Radnabengetriebe drehgelagert ist, welches eingangsseitig mit dem Antriebswellenteil antriebsverbunden ist.

Als Antriebsachsen ausgebildete Achsen mit Achsschenkel-Lenkung für schwere Last- bzw. Sonderfahrzeuge besitzen regelmäßig lenkbare Radseiten der eingangs angegebenen Art.

Derartige Achsen werden unter anderem für schwere Fahrzeuge, beispielsweise Kranfahrzeuge, eingesetzt, typischerweise mit 25-Zoll-Bereifung. Dabei sind bislang mehrteilige Felgen erforderlich, um einerseits die für solche Fahrzeuge üblichen Reifen montieren und andererseits hinreichend Bauraum für die Bremsanlage bieten zu können. Da die im Straßenverkehr zulässigen Achslasten begrenzt sind, werden allgemein Antriebsstränge mit geringem Gewicht angestrebt. Bei gewichtskritischen Anwendungsfällen sind in diesem Zusammenhang teure, zerlegbare Aluminiumfelgen üblich. Hier setzt die Erfindung an, indem vorgeschlagen wird, die üblichen mehrteiligen Stahlfelgen bei Gewichtsproblemen nicht durch mehrteilige Aluminiumfelgen, sondern durch einteilige Tiefbettfelgen zu ersetzen, die auch bei gewichtskritischen Fällen aus Stahl bestehen können. Neben einem erheblichen Kostenvorteil bieten solche Felgen den Vorteil besonders hoher Robustheit, die vor allem bei rauen Einsatzbedingungen wünschenswert ist.

Bislang scheitert der Einsatz von Tiefbett-Stahlfelgen jedoch daran, dass die räumlichen Verhältnisse an einer Antriebsachse mit Achsschenkel-Lenkung nicht den Einsatz von (vorzugsweise durch Druckluft betätigten) Scheibenbremsen zulassen. Denn im Gegensatz zu den mehrteiligen, zerlegbaren Felgen, die aufgrund ihrer Zerlegbarkeit ein sehr flaches Felgenbett aufweisen können, steht radial innerhalb der Tiefbett-Stahlfelgen kein hinreichender Unterbringungsraum für den Einsatzbedingungen der jeweiligen Fahrzeuge entsprechend dimensionierte Scheibenbremsen zur Verfügung, wobei erschwerend hinzukommt, dass die üblichen 25 Zoll-Reifen für ihre Montage ein besonders tiefes Reifenbett erfordern.

Aus der DE 10 2004 043 287 A1 ist eine Radseite mit den Merkmalen des Oberbegriffs des Anspruchs 1 bekannt.

Es ist Aufgabe der Erfindung, für angetriebene Achsen mit Achsschenkel-Lenkung neue Radseiten zu schaffen, die die Kombination von Scheibenbremsen und Tiefbett-Stahlfelgen (für die bisher übliche 25-Zoll-Bereifung) zulassen.

Diese Aufgabe wird erfindungsgemäß durch eine Radseite mit den Merkmalen des Anspruchs 1 gelöst.

An einer derartigen Radnabe sind ein für eine einteilige Tiefbettfelge bemessener Radflansch sowie eine damit verschraubbare Tiefbettfelge vorgesehen. Die Radnabe weist innerhalb eines Axialbereiches mit im Vergleich zum Durchmesser des Radnabengetriebes geringem Durchmesser eine gegenüber der Tiefbettfelge axial zur Achsgabel hin versetzte Bremsscheibe auf, die mit einer an der Achsschenkellagerung axial verschraubten Betriebsbremse zusammenwirkt.

Die Erfindung beruht auf der Erkenntnis, dass der Preisvorteil von Stahl-Tiefbettfelgen gegenüber mehrteiligen Aluminiumfelgen eventuelle Kostennachteile bei den Achskonstruktionen überkompensieren kann und an der Radseite bei Verminderung des Durchmessers der Radnabe im Bereich zwischen Felge und Achsgabel ein hinreichender Unterbringungsraum für geeignete druckluftbetätigte Scheibenbremsen geschaffen werden kann.

Gemäß einer besonders bevorzugten Ausführungsform der Erfindung ist vorgesehen, dass an einer axial an die Gelenkverbindung angrenzenden Wandung der mit der Achsgabel schwenkbar verbundenen Achsschenkelglocke der Achsschenkellagerung ein Bremsenträger axial verschraubt ist, an dem ein Bremssattel, vorzugsweise zwei Bremssättel axial verschraubt ist bzw. sind. Unter axialer Verschraubung wird verstanden, dass die Schraubenlängsachse (etwa) parallel zur Radachse ausgerichtet ist. Der Bremsenträger kann auf einer zur Achse des Achsschenkels orthogonalen Flanschfläche auf der Außenseite der vorgenannten Achsschenkelglocke angeordnet sein kann. Hiermit ist vorteilhafterweise eine Anordnung möglich, bei der sich der Bremssattel bzw. die Bremssättel von der Radseite aus am Bremsenträger montieren lassen.

Des Weiteren ist vorteilhaft, wenn der Achsgabelabstand entsprechend einem Maß bemessen ist, welches im Wesentlichen dem Querschnitt bzw. Raumbedarf der Gelenkverbindung zwischen dem den Achsschenkel durchsetzenden Wellenteil und einer im mittleren Achsabschnitt angeordneten Antriebswelle entspricht.

Bei Lenkbetätigung schwenkt der Achsschenkel in üblicher Weise um eine gegenüber der Vertikalen leicht geneigten Schwenkachse (sog. Spreizung der Schwenkachsen), welche sich in Aufwärtsrichtung von der Radebene entfernt und in Abwärtsrichtung an die Radebene annähert. Dies hat zur Folge, dass das vertikal untere Ende der Achsgabel den möglichen Bauraum für die Bremsanlage, sowie den Bremsenträger einschränken kann, da das untere Ende der Achsgabel einen umso geringeren Abstand von der Radebene hat, je tiefer es angeordnet ist. Indem nun gemäß der bevorzugten Ausführungsform der Erfindung das untere Ende der Achsgabel möglichst weit oben vorgesehen wird, das heißt an einer oberen Position, an der dem Verbindungsgelenk noch hinreichend Raum gegeben wird, wird gewährleistet, dass die Achsgabel keine Störkontur für die Anordnung der Bremse bilden kann.

Im Ergebnis wird auf diese Weise erreicht, dass die an der Achsschenkellagerung vorgesehene Flanschfläche für die Montage des Bremsenträgers von beiden Enden der Achsgabel (hinreichend) beabstandet ist.

Zusätzlich ist bevorzugt vorgesehen, dass die Achsgabel und die damit gelenkig verbundene Achsschenkelglocke in vertikaler Draufsicht auf die Radseite bzw. Antriebsachse schmal ausgebildet sind, so dass einerseits große Lenkwinkel (> 40°) erreichbar sind und gleichwohl (in vertikaler Draufsicht) neben der Achsschenkelglocke noch Aggregatteile der Bremsanlage (am Bremsenträger) angeordnet werden können.

Des Weiteren ist zweckmäßigerweise vorgesehen, das Radnabengetriebe axial schmal auszubilden, so dass der das Radnabengetriebe aufnehmende Nabenteil keinerlei weit über die Radebene axial hinausragende Störkontur bilden kann. Im Übrigen wird durch diese Maßnahme auch der mögliche axiale Bauraum für die Bremsanlage zwischen Rad und Achsgabel vergrößert.

Für die Dimensionierung der Bremsscheibe ist vorzugsweise vorgesehen, dass der Bremsscheibendurchmesser etwa dem vertikalen Außenmaß der Achsschenkellagerung entspricht. Damit ist einerseits eine weitestgehend geschützte Anordnung der Bremsanlage zwischen Rad und Achsgabel möglich, andererseits können auch die erforderlichen bzw. wünschenswerten Bremskräfte gewährleistet werden, zumal bei dieser Dimensionierung eine Doppelanordnung der Bremssättel möglich ist.

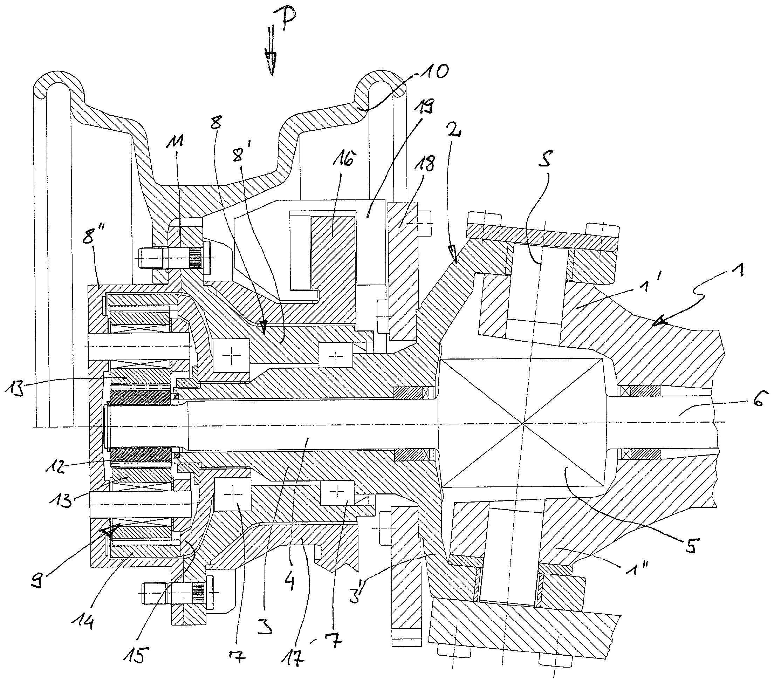

Im Übrigen wird hinsichtlich bevorzugter Merkmale der Erfindung auf die Ansprüche und die nachfolgende Beschreibung einer vorteilhaften Ausführungsform anhand der Zeichnung verwiesen.

Die dargestellten Merkmale können auch in einer von der zeichnerischen Darstellung abweichenden Kombination, gegebenenfalls auch als Einzelmerkmale erfindungswesentlich sein.

In der Zeichnung zeigt die einzige Figur einen Axialschnitt einer erfindungsgemäßen Radseite.

Gemäß der Zeichnung bezieht sich die Erfindung auf eine Antriebsachse mit Achsschenkellenkung. Dabei besitzt ein mittlerer, in der Regel das jeweilige Achsdifferential umfassender Abschnitt der Achse an seinen beiden Enden eine Achsgabel mit einem oberen Gabelende 1' und einem unteren Gabelende 1 ", an denen eine Achsschenkellagerung 2 mit einem Achsschenkel 3, der einstückig mit einer Achsschenkelglocke 3' verbunden ist, um eine durch die Gabelenden 1' und 1" vorgegebene Schwenkachse S lenkbeweglich angeordnet ist. Der Achsschenkel 3 ist als Hohlkörper ausgebildet und nimmt in einer axialen Zentralbohrung ein Antriebswellenteil 4 auf, welches antriebsmäßig über ein im Freiraum zwischen der Achsschenkelglocke 3' und den Gabelenden 1' und 1" angeordnete Gelenkverbindung 5 mit einer im mittleren Achsabschnitt angeordneten Antriebswelle 6 verbunden ist. Auf dem Achsschenkel 3 ist mit Wälz-, insbesondere Kegellagern 7 eine Radnabenanordnung 8 drehgelagert, die über ein Radnabengetriebe 9 mit dem Antriebswellenteil 4 in Antriebsverbindung steht. An der Radnabenanordnung 8 ist eine vorzugsweise aus Stahl bestehende Tiefbettfelge 10 angeordnet. Die Radnabenanordnung 8 umfasst ein axial inneres Gehäuseteil 8', welches auf den Wälz- bzw. Kegellagern 7 drehgelagert ist und dessen Außenumfang sich in Richtung der Gelenkverbindung 5 konisch verjüngt. Nach axial außen erweitert sich das innere Gehäuseteil 8' auf den Durchmesser eines für die Montage der Tiefbettfelge 10 vorgesehenen Radflansches 11, welcher als doppelwandiger Flansch ausgebildet ist, wobei die axial innere Wand als Teil des inneren Gehäuseteiles 8' und die axial äußere Wand als Teil eines axial äußeren Gehäuseteiles 8" ausgebildet ist, welches das Radnabengetriebe 9 aufnimmt.

Dieses Radnabengetriebe 9 kann als einstufiges Planetengetriebe ausgebildet sein, wobei das axial äußere Ende des Antriebswellenteiles 4 ein Sonnenrad 12 trägt, welches mit einer entsprechenden Innenverzahnung auf einer passenden Außenverzahnung des Antriebswellenteiles 4 formschlüssig bzw. drehfest angeordnet ist. Dieses Sonnenrad 12 kämmt mit Planetenrädern 13, die auf entsprechenden Achsbolzen am als Planetenträger ausgebildeten äußeren Gehäuseteil 8" drehgelagert sind. Des Weiteren kämmen die Planetenräder 13 mit einem im äußeren Gehäuseteil 8" angeordneten Hohlrad 14, welches über einen Hohlradträger 15 in grundsätzlich bekannter Weise drehfest mit dem Achsschenkel 3 verbunden ist. Dazu greift der Hohlradträger mit einer inneren Umfangsverzahnung formschlüssig in eine entsprechende Außenverzahnung am Achsschenkel 3 und mit einer äußeren Umfangsverzahnung in eine bzw. die Innenumfangsverzahnung des Hohlrades 14 ein.

Der Hohlradträger 15 hat eine schüsselartige Form, die der Konusform des inneren Gehäuseteiles 8' nahe des Radflansches 11 angepasst ist.

Am Radflansch 11 ist des Weiteren eine Bremsscheibe 16 mittels eines mit ihr verbundenen hülsenförmigen Bremsscheibenträgers 17 angeordnet, der vom axial inneren Gehäuseteil 8' durch einen Luftspalt radial beabstandet ist. Dadurch wird eine thermische Isolierung der Bremsscheibe 16 gegenüber dem Gehäuseteil 8' gewährleistet und insbesondere vermieden, dass radial zwischen dem Achsschenkel 3 und dem Gehäuseteil 8' angeordnete Dichtungen thermisch zerstört werden könnten.

Die Bremsscheibe ist bevorzugt als dicke Massivscheibe ausgebildet, die bei kurzzeitig aufeinanderfolgenden "Gewaltbremsungen" große Wärmemengen unter entsprechender Erhitzung ohne Einbuße bei ihrer mechanischen Stabilität aufzunehmen vermag und insofern gegenüber einer innenbelüfteten Bremsscheibe vorteilhaft ist.

Im dargestellten Beispiel ist die Bremsscheibe 16 in Achsrichtung der Radnabenanordnung 8 in etwa gleicher Ebene wie das axial innere Wälz- bzw. Kegellager 7 angeordnet. Der der Bremsscheibe 16 zugeordnete Bremssattel bzw. die zugeordnete Bremszange können zur Gewährleistung sehr hoher Bremsmomente doppelt angeordnet sein, wobei zur Befestigung einer mit der Bremsscheibe 16 zusammenwirkenden Betriebsbremse ein Bremsen- bzw. Sattelträger 18 auf einer Flanschfläche auf der Außenseite der Achsschenkelglocke 3' dient. Um hinreichenden Bauraum für die Bremssättel gewährleisten zu können, ist die den Bremsen- bzw. Sattelträger 18 aufweisende Wandung der Achsschenkelglocke 3' so weit als möglich an die Gelenkverbindung 5 angenähert. Gleichzeitig wird durch eine bei Ansicht in Pfeilrichtung P besonders schmale Ausbildung der Achsgabel 1 sowie der Achsschenkelglocke 3' ein hinreichender Freiraum für die Bremssättel und Bremsaggregatteile bei Lenkbewegungen des Achsschenkels 3 gewährleistet:

Das untere Ende 1" der Achsgabel 1 besitzt eine der Gelenkverbindung 5 vertikal angenäherte Position, so dass das untere Ende 1" aufgrund der geneigten Schwenkachse S eine maximal von der Radebene beabstandete Lage erhält und keinerlei Störkontur für Bremsorgane bilden kann.

Aus der Zeichnung wird deutlich, dass für die erfindungsgemäß vorgesehene Kombination einer Tiefbettfelge mit einer Scheibenbremsanordnung an einer Radseite einer Antriebsachse mit Achsschenkellenkung insbesondere folgende Merkmale von besonderer Wichtigkeit sind:
Zwischen der Radebene und der zugewandten Seite der Achsschenkellagerung besitzt die Radnabenanordnung 8 einen im Vergleich zum Radnabengetriebe 9 deutlich verminderten Durchmesser, wobei eine solche Ausgestaltung der Radnabenanordnung durch einen Achsschenkel 3 mit geringem Durchmesser sowie durch Wälz- bzw. Kegellager 7 mit geringer radialer Höhe begünstigt wird.

Des Weiteren sollte zwischen der Radebene und der zugewandten Seite der Achsschenkellagerung 2 ein möglichst großer Axialabstand vorliegen. Dies wird einerseits begünstigt durch ein axial schmal bauendes Radnabengetriebe 9, welches aufgrund seiner Schmalheit ohne Bildung einer unzulässigen Störkontur auf der Radaußenseite vorgesehen werden kann. Des Weiteren wird die Glocke 3' der Achsschenkellagerung 2 soweit als möglich an die Gelenkverbindung 5 zwischen der Antriebswelle 6 und dem Antriebswellenteil 4 angenähert, wobei die Ebene der als Flanschfläche nutzbaren Außenseite der Achsschenkelglocke 3' auch im Bereich des unteren Endes 1" der Achsgabel 1 störkonturenfrei bleibt, wenn das untere Ende 1" der Achsgabel 1 soweit als möglich vertikal der Gelenkverbindung 5 angenähert wird.

Gegenüber Achsgabeln mit größerem Gabelabstand treten dann zwar an den Gabelenden erhöhte Kräfte bzw. Momente auf, die jedoch ohne Weiteres durch entsprechende Materialwahl und Dimensionierung beherrscht werden können.

Außerdem lässt die Zeichnung deutlich erkennen, dass der Bremsen- bzw. Sattelträger 18 an der Achsschenkelglocke 3' und die Bremssättel 19 am Bremsen- bzw. Sattelträger 18 axial verschraubt sein können. Dies begünstigt eine Doppelanordnung der Bremssättel.

Insgesamt ist festzuhalten, dass ein gegebenenfalls erhöhter herstellungsmäßiger oder konstruktiver Aufwand an der Radseite überkompensiert wird durch die Preisvorteile einer Stahl-Tiefbettfelge 10, deren Verwendung bei der Erfindung ohne Weiteres möglich wird, wobei als weiterer Vorteil hinzutritt, dass eine Stahl-Tiefbettfelge bei vergleichbaren Gewichtsvorteilen deutlich robuster als bisher übliche mehrteilige Aluminiumfelgen ist. Darüber hinaus wird ein Gewichtsvorteil erzielt.

### Bezugszeichenliste

- 1: Achsgabel
- 1', 1": oberes, unteres Gabelende
- 2: Achsschenkellager
- 3: Achsschenkel
- 3': Achsschenkelglocke
- 4: Antriebswellenteil
- 5: Gelenkverbindung
- 6: Antriebswelle
- 7: Wälz- bzw. Kegellager
- 8: Radnabenanordnung
- 8', 8": axial inneres, axial äußeres Gehäuseteil
- 9: Radnabengetriebe
- 10: Tiefbettfelge
- 11: Radflansch
- 12: Sonnenrad
- 13: Planetenräder
- 14: Hohlrad
- 15: Hohlradträger
- 16: Bremsscheibe
- 17: Bremsscheibenträger
- 18: Bremsen- bzw. Sattelträger
- 19: Bremssattel
- S: Schwenkachse
- P: Pfeilrichtung

## Patentansprüche

1. Radseite einer Antriebsachse für schwere Kranfahrzeuge oder dergleichen, mit einem von einem Antriebswellenteil (4) axial durchsetzten Achsschenkel (3), auf dem eine Radnabenanordnung (8) mit drehgelagert ist, die ein eingangsseitig mit dem Antriebswellenteil (4) antriebsverbundenes Radnabengetriebe (9) aufweist, wobei an der Radnabenanordnung (8) ein für eine Tiefbettfelge (10) bemessener Radflansch (11) sowie eine damit verschraubbare einteilige Tiefbettfelge (10) vorgesehen sind, und wobei die Radnabenanordnung (8) innerhalb eines Axialbereiches mit im Vergleich zum Durchmesser des Radnabengetriebes (9) geringem Durchmesser eine gegenüber der Tiefbettfelge (10) axial nach innen versetzte Bremsscheibe (16) aufweist, die mit einer Betriebsbremse zusammenwirkt,
**dadurch gekennzeichnet,**
**dass** die Radseite lenkbar ist und eine an einer Achsgabel (1) eines mittleren Achsabschnittes lenkbeweglich angeordnete Achsschenkellagerung (2) aufweist, wobei die Betriebsbremse an der Achsschenkellagerung (2) axial verschraubt ist.

2. Radseite nach Anspruch 1,
**gekennzeichnet durch** eine Tiefbettfelge (10) aus Stahl.

3. Radseite nach Anspruch 1 oder 2,
**dadurch gekennzeichnet,**
**dass** an einer Wandung einer Achsschenkelglocke (3') der Achsschenkellagerung (2) ein Bremsenträger oder ein Bremssattelträger (18) angeordnet ist.

4. Radseite nach Anspruch 3,
**dadurch gekennzeichnet,**
**dass** der Bremssattelträger (18) auf einer zur Achse des Achsschenkels (3) orthogonalen Flanschfläche auf einer Außenseite der Wandung der Achsschenkelglocke (3') angeordnet ist.

5. Radseite nach Anspruch 4,
**dadurch gekennzeichnet,**
**dass** der Bremssattelträger (18) als orthogonal zur Achse des Achsschenkels (3) erstreckte Flanschplatte ausgebildet ist.

6. Radseite nach einem der Ansprüche 1 bis 5,
**dadurch gekennzeichnet,**
**dass** die Achsgabel (1) zwei Gabelenden (1', 1") aufweist, deren Abstand im Wesentlichen dem Querschnitt einer Gelenkverbindung (5) zwischen dem den Achsschenkel (3) durchsetzenden Antriebswellenteil (4) und einer im mittleren Achsabschnitt angeordneten Antriebswelle (6) entspricht.

7. Radseite nach einem der Ansprüche 3 bis 5,
**dadurch gekennzeichnet,**
**dass** der Bremssattelträger (18) oder eine Ebene der mit dem Bremssattelträger (18) verbundenen Außenseite der Achsschenkelglocke (3') von zwei Enden (1', 1") der Achsgabel (1) beabstandet ist.

8. Radseite nach einem der Ansprüche 1 bis 7,
**dadurch gekennzeichnet,**
**dass** die Bremsscheibe (16) mittels eines hülsenförmigen Bremsscheibenträgers (17) auf einer axialen Innenseite des Radflansches (11) angeordnet ist.

9. Achsseite nach einem der Ansprüche 1 bis 8,
**dadurch gekennzeichnet,**
**dass** der Außendurchmesser der Bremsscheibe (16) etwa dem vertikalen Außenmaß der Achsschenkellagerung (2) entspricht.

10. Achsseite nach Anspruch 8,
**dadurch gekennzeichnet,**
**dass** der hülsenförmige Bremsscheibenträger (17) durch einen ringförmigen Luftspalt von radial benachbarten Gehäuseteilen (8') der Radnabenanordnung (8) beabstandet ist.

## Claims

1. A wheel side of a drive axle for heavy crane vehicles or the like, having a knuckle (3) which is axially passed through by a drive shaft part (4) and at which a wheel hub arrangement (8) is rotatably supported which has a wheel hub gear (9) drive-connected to the drive shaft part (4) at an input side, wherein a wheel flange (11) dimensioned for a drop center rim (10) and an integrally formed drop center rim (10) which can be screwed to the wheel flange are provided at the wheel hub arrangement (8); and wherein, within an axial range having a diameter which is small in comparison with the diameter of the wheel hub gear (9), the wheel hub arrangement (8) has a brake disk (16) which is axially inwardly displaced with respect to the drop center rim (10) and which cooperates with a service brake,
**characterized in that**
the wheel side is steerable and has a knuckle support (2) which is arranged in a steerable manner at an axle guard (1) of a middle axle section, with the service brake being axially screwed to the knuckle support (2).

2. A wheel side in accordance with claim 1,
**characterized by** a drop center rim (10) of steel.

3. A wheel side in accordance with claim 1 or claim 2,
**characterized in that**
a brake anchor plate or a brake caliper bracket (18) is arranged at a wall of a knuckle cap (3') of the knuckle support (2).

4. A wheel side in accordance with claim 3,
**characterized in that**
the brake caliper bracket (18) is arranged at a flange surface orthogonal with respect to an axis of the knuckle (3) at an outer side of the wall of the knuckle cap (3').

5. A wheel side in accordance with claim 4,
**characterized in that**
the brake caliper bracket (18) is formed as a flange plate extended orthogonally to the axis of the knuckle (3).

6. A wheel side in accordance with any one of the claims 1 to 5,
**characterized in that**
the axle guard (1) has two guard ends (1', 1 ") whose spacing substantially corresponds to a cross-section of a joint connection (5) between the drive shaft part (4) passing through the knuckle (3) and a drive shaft (6) arranged in the middle axle section.

7. A wheel side in accordance with any one of the claims 3 to 5,
**characterized in that**
the brake caliper bracket (18) or a plane of the outer side of the knuckle cap (3') connected to the brake caliper bracket (18) is spaced apart from two ends (1', 1 ") of the axle guard (1).

8. A wheel side in accordance with any one of the claims 1 to 7,
**characterized in that**
the brake disk (16) is arranged at an axial inner side of the wheel flange (11) by means of a sleeve-shaped brake disk plate (17).

9. An axle side in accordance with any one of the claims 1 to 8,
**characterized in that**
an outer diameter of the brake disk (16) approximately corresponds to a vertical outer dimension of the knuckle support (2).

10. An axle side in accordance with claim 8,
**characterized in that**
the sleeve-shaped brake disk plate (17) is spaced apart from radially adjacent housing parts (8') of the wheel hub arrangement (8) by a ringshaped air gap.

## Revendications

1. Côté roue d'un essieu moteur pour des véhicules-grues lourds ou similaires, comportant une fusée d'essieu (3) traversée axialement par une partie d'arbre moteur (4) et sur laquelle est monté en rotation un agencement de moyeu de roue (8) qui comprend une transmission de moyeu de roue (9) reliée en entraînement du côté entrée à la partie d'arbre moteur (4),
dans lequel
il est prévu, sur l'agencement de moyeu de roue (8), un flasque de roue (11) dimensionné pour une jante à base creuse (10), ainsi qu'une jante à base creuse (10) monobloc susceptible d'être vissée sur celui-ci, et
à l'intérieur d'une zone axiale ayant un diamètre réduit par comparaison au diamètre de la transmission de moyeu de roue (9), l'agencement de moyeu de roue (8) comprend un disque de frein (16) décalé axialement vers l'intérieur par rapport à la jante à base creuse (10), qui coopère avec un frein de service,
**caractérisé en ce que**
le côté roue est dirigeable et comprend un porte-fusée d'essieu (2) agencé de façon dirigeable sur une fourche d'essieu (1) d'une portion d'essieu centrale, le frein de service étant vissé axialement sur le porte-fusée d'essieu (2).

2. Côté roue selon la revendication 1,
**caractérisé par**
une jante à base creuse (10) en acier.

3. Côté roue selon la revendication 1 ou 2,
**caractérisé en ce que**
un support de frein ou un support d'étrier de frein (18) est agencé sur une paroi de la cloche de fusée d'essieu (3') du porte-fusée d'essieu (2).

4. Côté roue selon la revendication 3,
**caractérisé en ce que**
le support d'étrier de frein (18) est agencé sur une surface de flasque orthogonale à l'axe de la fusée d'essieu (3), sur un côté extérieur de la paroi de la cloche de fusée d'essieu (3').

5. Côté roue selon la revendication 4,
**caractérisé en ce que**
le support d'étrier de frein (18) est réalisé sous forme de plaque de flasque qui s'étend orthogonalement à l'axe de la fusée d'essieu (3).

6. Côté roue selon l'une des revendications 1 à 5,
**caractérisé en ce que**
la fourche d'essieu (1) comprend deux extrémités de fourche (1', 1") dont la distance correspond sensiblement à la section transversale d'une liaison articulée (5) entre la partie d'arbre moteur (4) traversant la fusée d'essieu (3) et un arbre moteur (6) agencé dans la portion d'essieu centrale.

7. Côté roue selon l'une des revendications 3 à 5,
**caractérisé en ce que**
le support d'étrier de frein (18) ou un plan du côté extérieur, relié au support d'étrier de frein (18), de la cloche de fusée d'essieu (3') est espacé de deux extrémités (1', 1 ") de la fourche d'essieu (1).

8. Côté roue selon l'une des revendications 1 à 7,
**caractérisé en ce que**
le disque de frein (16) est agencé sur un côté intérieur axial du flasque de roue (11) au moyen d'un support de disque de frein (17) en forme de douille.

9. Côté roue selon l'une des revendications 1 à 8,
**caractérisé en ce que**
le diamètre extérieur du disque de frein (16) correspond approximativement à la dimension extérieure verticale du porte-fusée d'essieu (2).

10. Côté roue selon la revendication 8,
**caractérisé en ce que**
le support de disque de frein (17) en forme de douille est espacé des parties de boîtier (8') radialement voisines de l'agencement de moyeu de roue (8) par une fente d'air annulaire.
